# EUROPEAN PATENT SPECIFICATION

(11) **EP 3 887 667 B1**
(45) Date of publication and mention of the grant of the patent: **23.11.2022**
(21) Application number: 19801014.2
(22) Date of filing: 08.11.2019
(51) Int. Cl.: F03B 3/06, F03B 17/06, G05D 7/06

(54) **A SYSTEM FOR CONTROLLING A FLOW OF WATER FROM A PROCESS FACILITY ONBOARD A VESSEL**
EIN SYSTEM ZUR STEUERUNG EINES WASSERFLUSSES AUS EINER PROZESSANLAGE AN BORD EINES SCHIFFES
UN SYSTÈME DE CONTRÔLE D'UN FLUX D'EAU PROVENANT D'UNE INSTALLATION DE TRAITEMENT À BORD D'UN NAVIRE

(30) Priority: 30.11.2018 NO 20181548
(43) Date of publication of application: 06.10.2021
(73) Proprietor: Golar Management AS, 0160 Oslo (NO)
(72) Inventor: SCHANKE, Øystein, 0467 OSLO (NO)
(74) Representative: Onsagers AS
(86) International application number: PCT/EP2019/080653
(87) International publication number: WO 2020/108953

(56) References cited:
- KR-A- 20150 023 133
- KR-A- 20170 139 479
- OMKAR YADAV ET AL: "Pond head level control in a run-of-river hydro power plant using fuzzy controller", INTELLIGENT SYSTEM APPLICATION TO POWER SYSTEMS (ISAP), 2011 16TH INTERNATIONAL CONFERENCE ON, IEEE, 25 September 2011 (2011-09-25), pages 1-5, XP032011023, DOI: 10.1109/ISAP.2011.6082177 ISBN: 978-1-4577-0807-7

## Description

### Technical field

The present invention relates to a system and method for controlling the flow of water in a process facility onboard a vessel, and more particularly a system and method for controlling the water return flow from a process facility and regenerating electric energy from this flow.

### Background

On floating oil and gas facilities such as FSRUs, FLNGs and FPSOs sea water is typically used to transport heat to and from the process flows. An example of such a process is onboard open loop FSRUs where sea water is used to heat and re-gas liquefied natural gas (LNG) from approx. -160 °C to ambient temperatures before the vaporized natural gas is exported to shore. Typically, the process facility is located on main deck of the vessel. This means that a significant amount of water is lifted, by centrifugal pumps, from sea level up to the re-gasification process facility on main deck. This lifting height can be significant and will typically range from 20 to 30 meters above sea level for a standard FSRU. For other types of floating units, the lifting height above sea level can vary widely. After the sea water has been lifted to main deck it is routed through a process facility where heat is exchanged between the sea water and e.g. LNG, also known as a heat exchanger. Downstream of the process facility the sea water is discharged back to sea level again trough a vertical discharge pipe which is drained by gravity. On FSRUs the sea water volume flow is subject to natural gas sendout rate but can typically be from 6,000 to 18,000 m³/h.

When sea water is elevated to a height above sea level and then discharged back to sea level in a closed piping system a negative pressure (relative to atmospheric pressure) is formed in the high point of the piping system. This negative pressure represents a risk of damaging the process equipment in the heating system. This is because negative pressure can lead to cavitation, which is very harmful for process facilities such as heat exchangers.

Cavitation is the formation of vapor cavities in a liquid. These vapor cavities are in the form of small liquid-free zones ("bubbles" or "voids"), that are the consequence of forces acting upon the liquid. It usually occurs when a liquid is subjected to rapid changes of pressure that cause the formation of cavities in the liquid where the pressure is relatively low. When subjected to higher pressure, the voids implode and can generate an intense shock wave.

Cavitation is a significant cause of wear in some engineering contexts. Collapsing voids that implode near to a metal surface cause cyclic stress through repeated implosion. This results in surface fatigue of the metal causing a type of wear also called "cavitation". The most common examples of this kind of wear are to pump impellers, and bends where a sudden change in the direction of liquid occurs.

In efforts to reduce the risk of cavitation in the sea water system these sea water loops are normally equipped with a vacuum breaker system. This system is installed in efforts to eliminate any vacuum in the system and to prevent damage to process equipment due to cavitation. However, the use of vacuum breakers also has some unfavorable side effects.

First, the vacuum breaker pulls inn significant amounts of air into the sea water flow. This means that the total volume flow inside the piping system increases, and hence, the flow velocity inside the sea water pipes also increase which leads to increased stress and erosion on the piping system.

A vacuum breaker normally works in such a way that it is closed when the pressure in the sea water system is positive (relative to atmospheric pressure), and open when the pressure in the sea water system is lower than atmospheric. This means that the vacuum breaker will close when the pressure in the pipe system has reached atmospheric pressure. Closing of the vacuum breaker will then lead to a pressure drop in the system which in turn opens the vacuum breaker again. The result of this mechanism is that the sea water system will experience pressure fluctuations and a variable volume flow of air and sea water. This can lead to unfavorable flow conditions and increased vibrations in the sea water pipes.

The vacuum breaker will introduce a mix of liquid water and gaseous air downstream of the vacuum breaker. This means that the composition of the flow at the sea water discharge point contains a high amount of air compared to normal sea water. This increased concentration of air can cause the formation of a foam like substance surrounding the sea water discharge point. Such foam is not harmful to the environment, but the visual effect is that it is recognized as pollution. It is therefore desirable to eliminate the occurrence of this foam.

The fact that the discharged sea water contains a high concentration of air also increases the risk of air getting sucked into the sea water suction inlets. The sea water heating loop inlet and outlet points can be in close proximity to each other and the increased concentration of air in the sea water surrounding the discharge point therefore impose a risk of air in the sea water pump suction. This will have a negative impact on the pump performance and the pumps expected lifetime.

It is common for sea water pipes onboard vessels to be equipped with an internal rubber lining (or equivalent) in efforts to mitigate corrosion of the steel pipes. This lining is typically not self-supporting and will therefore be vulnerable to implosion if a negative pressure difference occurs between the inner and outer side of the lining. Hence, the risk of implosion of rubber lining can be significant in systems where internal negative pressure occurs.

Some methods to eliminate the above-mentioned issues have been implemented and tested onboard FSRUs.

By using sea water discharge valves, it is possible to throttle the flow. This increase the back pressure of the heating system to a level where positive pressure at the high point is achieved. Using the discharge valve to throttle the flow will enable pressure control in the upstream piping system but can also introduce cavitation issues downstream of the valve. By using a throttling valve, the potential energy stored in the elevated water flow will not be recovered.

By reducing the lifting height of the sea water to a minimum it is possible to reduce the occurrence of vacuum in the system. This solution has been adopted on the latest type of FSRUs. By reducing the total required lifting height of the sea water, the negative pressure that occur in the high point is reduced if the total lift is reduced to less than approx. 10.3 meters above sea level. In efforts to achieve this reduction in lifting height, an intermediate closed heating loop is introduced to the system. This heating loop is typically based on a glycol mixture which is circulated between the sea water/glycol heat exchanger down in the pump room and the LNG/glycol vaporizer skid located on deck. On this configuration the sea water/glycol heat exchangers are typically located inside the pump room onboard the vessel at a low elevation. This is an enclosed space and it is therefore not considered as a suitable solution to heat exchange the high-pressure LNG and the sea water directly inside the pump room (introducing pressurized hydrocarbons into an enclosed space is not favorable). That is the reason for the heat transport by use of a closed loop glycol flow from pump room to deck. This solution can potentially reduce the issues with cavitation and vacuum breakers. A down side is that it adds a lot of process equipment (heat exchangers, glycol pumps, valves etc.) which makes it more complicated to install and operate the system. Another advantage with the glycol loop system is that it reduced the overall pump duty of the sea water pumps, However, the pressure loss in the glycol system is significant due to the additional process equipment. This means that most of the energy saved on the reduced lifting duty of the sea water pumps are lost in the glycol loop due to pressure losses which needs to be overcome by the glycol circulation pumps.

Another alternative way to mitigate some of the issues with the vacuum breaker is to design an oversized vacuum breaker without a closing function (for overpressure). An oversized vacuum breaker will pull in sufficient amounts of air to make the pipe system work against constant atmospheric pressure and hence eliminate any vacuum and cavitation issues. As the breaker don't close upon atmospheric pressure, it will provide a more stable flow with less pressure fluctuations compared to a "conventional" breaker system. A down-side is that it does not limit the mixing of air into the sea water flow, and all the corresponding effects of such mixed flow. Designing a vacuum breaker without a check valve means that you also need to design the vacuum breaker to have a sufficient elevation above the available head in the sea water system or handle potential spill in another way.

Elevating sea water to the main deck of a vessel, as described above, is energy consuming. When on main deck, the sea water has a great amount of potential energy. After the water has been used in the process facility, typically a heat exchanger module or any other system wherein seawater is used as part of the process, it is returned to the ocean without harvesting any of the potential energy.

Korean patent application KR20170139479A (Hyundai Heavy Ind.) discloses a ship having a regasification system comprising a hull; a vaporizer provided to an upper portion of the hull and vaporizing liquefied gas to be supplied to a demand source; and a heat source supply device provided inside the hull and supplying a heat source to the vaporizer.

The conference publication by Omkar Yadav et al. "Pond head level control in a run-of-river hydro power plant using fuzzy controller", 2011, 16th International Conference on Intelligent System Applications to Power Systems*,* discloses that the run-of-river hydro power plant usually have low or nil water storage capacity, and therefore an adequate control strategy is required to keep the water level constant in pond. The paper presents a novel technique based on TSK fuzzy controller to maintain the pond head constant. The performance is investigated over a wide range of hill curve of hydro turbine. The results are compared with PI controller as discussed in [1].

### Summary of the invention

It is an objective of the present invention to solve the problems mentioned above. Said objective is fully or partly achieved by a system and a method according to the independent claims. Preferred embodiments are set forth in the dependent claims.

The present invention describes a system for controlling a flow of water from a process facility onboard a vessel. The system comprises a water supply line comprising a water supply line inlet and a water supply line outlet, wherein the water supply line inlet is arranged to be in fluid communication with a water reservoir. The system further comprises a pumping device arranged between the water supply line inlet and the water supply line outlet; a water return line comprising a water return line inlet and a water return line outlet; a process facility in fluid communication with the water supply line outlet and the water return line inlet; a water turbine device arranged between the water return line inlet and the water return line outlet, adapted to receive a gravity flow of water from the process facility; and an energy generating device connected to and driven by the water turbine device.

The present invention also describes a method for controlling a flow of water from a process facility onboard a vessel, using the above-mentioned system. The method comprises the steps of directing a flow of water from the process facility through the water return line, from the water return line inlet to the water return line outlet; and restricting the water flow rate through the water return line by means of the water turbine device.

The system may further comprise wicket gates, arranged upstream the water turbine device, which are suitable for controlling the flow rate and pressure head in the return line.

The system may further comprise a surge tank arranged in fluid communication with the water return line.

The water turbine device may be a Kaplan-type turbine with adjustable blades.

The system may further comprise a level measurement device, provided in the water return line or in the surge tank.

The initial function of the system is to obtain a positive pressure head in the entire water system to limit all the above-mentioned issues with negative pressure. In addition, the system will work as an energy recovery unit enabling utilization of the potential energy stored in the elevated water flow.

It is therefore an object of the present invention to recover some of the potential energy of the elevated water flow from the water heating/cooling system.

It is an object to reduce the velocity of the water flow due to elimination of air suction from vacuum breaker.

It is an object to eliminate the pressure fluctuations from the vacuum breaker which leads to increased vibration loads on the system.

It is an object of the present invention to eliminate two phase flows in the water heating system and hence eliminating foaming at the water discharge outlets.

It is an object of the present invention to eliminate air injection into surrounding water, which will eliminate the risk of getting water with increased air content into the water suction system.

It is an objective of the present invention to reduce the risk of implosion of pipe inner lining caused by negative pressure difference between inner and outer wall of the lining.

When air is pulled into the vacuum breaker, the air creates noise. The noise can be significant if the vacuum breaker is not well designed. The turbine system will reduce this noise as it enables atmospheric pressure in the sea water system and limits air suction trough the vacuum breaker. The noise reduction is a consequence of the limitation of air being sucked trough the vacuum breaker.

The hydro power turbine also enables the system to function without the vacuum breaker, which in turn will reduce the cost of the system.

The system eliminates the risk of sucking unwanted objects into the seawater system, such as birds, fish, sand, silt, rags, driftwood, garbage etc.

### Brief description of the drawings

The invention will now be described with reference to the exemplifying embodiments shown in the accompanying drawings, wherein:
Fig. 1 is a process flow diagram of a prior art solution;
Fig. 2 is a process flow diagram of a preferred embodiment of the present invention;
Fig. 3 is a cross sectional view of a preferred embodiment of the present invention installed in the bow of a vessel;
Fig. 4 is a perspective drawing of a surge tank connected to a regassification unit;
Fig. 5a is a perspective drawing of a surge tank according to the preferred embodiment of figure 4; and
Fig. 5b is a cross section of the perspective drawing figure 5a.

### Detailed description

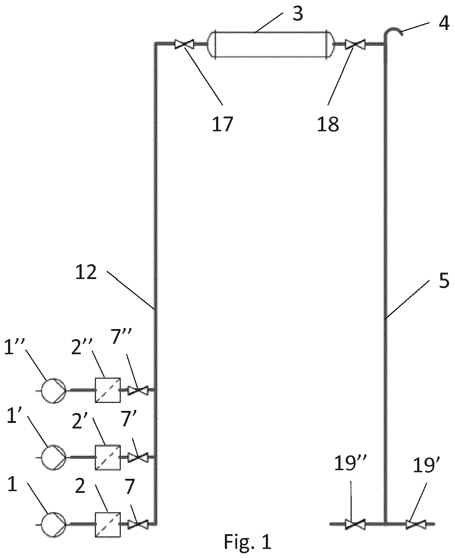

Fig. 1 is a process flow diagram of an example of a prior art solution. Here it is illustrated how water flow through a process facility 3. In this example the process facility 3 is a type of heat exchanger. A set of water pumps 1 provide water from a water reservoir to the process facility 3, via a water supply line 12. The process facility 3 is usually located on the main deck of the vessel. The water supply line 12 has an inlet and an outlet. The inflow through the water supply line inlet is controlled by a water supply line inlet valve 7; 7'; 7". The flow through the water supply line outlet is controlled by a water supply line outlet valve 17. Water filters 2 are arranged downstream the water pumps 1. Thus, the water is filtered before it enters the process facility 3. In the process facility 3, the water is used to heat the LNG as part of the regasification process. After heat exchange has been performed in the process facility 3, the water is discharged via the water return line 5. The water return line 5 has an inlet and an outlet. The water is typically returned to the water reservoir from which it was supplied, normally the ocean. A vacuum breaker 4 is connected to an upper point of the water return line 5. Preferably the water return line has two outlets 6, one on the port side of the vessel and another one on the starboard side of the vessel. The flow through the water return outlet 6 is controlled by a water return line outlet valve 19. The inflow through the water return inlet is controlled by a water return line inlet valve 18.

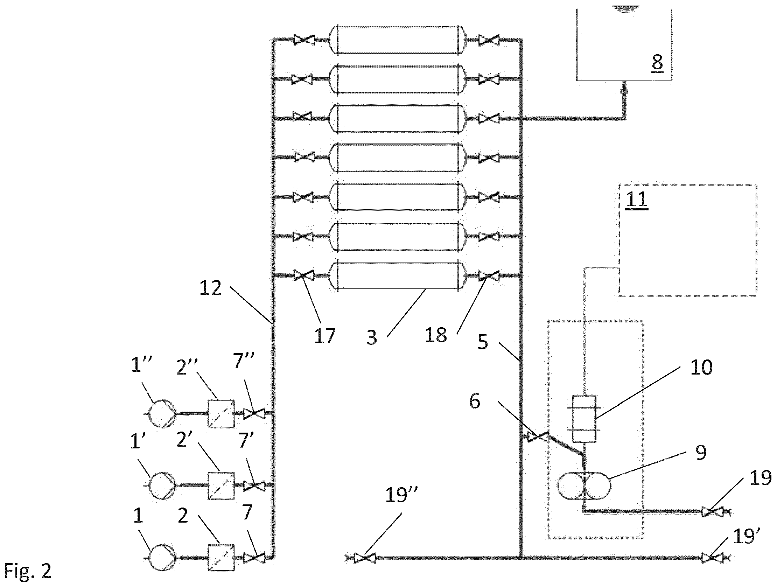

Fig. 2 is a process flow diagram of a preferred embodiment of the present invention. The system described in this application is a multipurpose system intended to both save energy and improve the flow characteristics in process facilities onboard floating vessels, such as FSRUs, FLNGs and FPSOs. The example in Fig. 1 is for a regasification plant onboard an FSRU utilizing sea water to heat the LNG.

Water is pumped via the water supply line 12 which extends through at least one opening in the hull 20 of the vessel. The water supply line inlet is in fluid communication with a water reservoir, in this case the ocean. At least one water pump 1 directs a flow of water from the water reservoir through at least one water filter 2 arranged in the water supply line 12. This water filter 2 filters out particles that may damage the equipment further on. After filtering, the water enters the process facility 3. In the process facility 3 the water is used to heat and subsequently re-gas the LNG. After heat exchange has taken place between the water and the LNG, the water is directed through the water return line 5, typically to return to the water reservoir. A surge tank 8 is arranged in fluid communication with the water return line 5, preferably a high point of the water return line 5. The surge tank 8 is used to control the pressure head in the water system and to handle any sudden variations in flow. The surge tank 8 is fitted with a level measurement device, such as a pressure transmitter, level switch or radar. The water column in the surge tank 8 is regulated by the turbine governor which receives input from the level measurement device. The water column will be maintained at a pre-determined level, which secures a positive pressure in the entire system. The water level may be controlled by regulating the wicket gates in the water return line 5 according to the water level in the surge tank 8. The surge tank 8 is ventilated to the atmosphere so that the water column in the surge tank 8 will work against atmospheric pressure. In a lower part of the water return line 5 it is arranged a water turbine 9. This water turbine 9 may preferably be a Kaplan turbine with adjustable blades. However, a person skilled in the art will understand that any other type of suitable turbine can be used. The water turbine 9 is connected to an electric Energy generating device10 via a shaft 13. This Energy generating device10 can generate electric power from the rotation of the water turbine 9. The energy generating device 10 can also generate heat, which e.g. can be used in the process facility. The energy generating device 10 can also be coupled to drive rotating machinery, such as a compressor or similar. The energy generating device 10 and the water turbine 9 can be controlled from a control room 11. From this control room 11 it is possible to control the wicket gates in such a way that it is possible to control the flow rate and pressure head in the water return line 5. From the control room 11, it is also possible to control the adjustable blades of the water turbine device 9. When used to generate electric power, the optimal orientation of the turbine blades depends on the flow rate.

After passing the water turbine 9, the water flows through a draft tube, before it exits the water return line 5 through the water return line outlet. Draft tubes are used to prevent cavitation downstream water turbines.

Alternatively, the water return line 5 can be teed out to have additional outlets through which the water can exit without passing through the water turbine 9. This can be useful for instance during maintenance of the water turbine 9 and associated equipment.

Further the flow of water through the system can be controlled by valves 5; 6; 7; 17; 19. Valves can be placed on the inlet and/or outlet of all the different components in the system, such as the water supply line 12, the water return line 5, the process facility 3, the surge tank 8 and the water turbine 9. By implementing valves 5; 6; 7; 17; 19 and arranging similar units in parallel the system will have redundancy, e.g. the flow of water can bypass defect components in the system.

As an alternative to the level measurement device provided in the surge tank 8 or in the water return line 5, the sea water system may be provided with a volume flow transmitter or other means suitable for providing data from which the appropriate adjustment of the wicket gates may be determined.

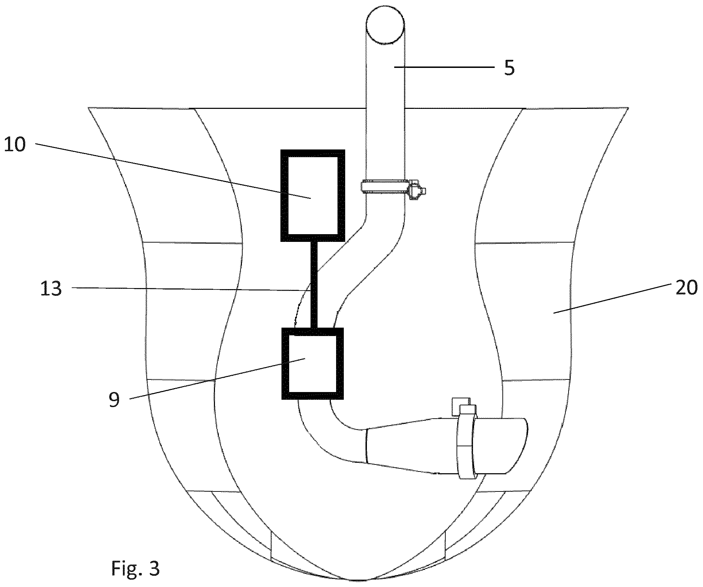

Fig. 3 is a cross sectional view of a preferred embodiment of the present invention installed in the bow of a vessel. The water return line 5 is displayed with a top part extending above the upper deck of the bow of the vessel. From here the water return line 5 directs the water through the upper deck and into the hull 20 of the bow area. From here the water is directed down through the hull 20 and to the water turbine 9. From the water turbine 9 the water is directed to the turbine discharge pipe 12.

It is further displayed that an energy generating device10 is arranged above the water turbine 9. A shaft 13 connects the water turbine 9 to a rotor of the energy generating device 10. The shaft 13 rotates as water cause the water turbine 9 to rotate. The rotation of the shaft 13 is subsequently causing the rotor to rotate, and thus generating electric energy. In this way, at least some of the energy used by the pump 1 when lifting the water from the reservoir to the process facility 3 is recovered. The pitch of the adjustable blades of the water turbine 9 can be controlled from a control room 11. The pitch of the adjustable blades is adjusted according to the volume flow through the water return line 5 to achieve highest possible efficiency of the water turbine 9.

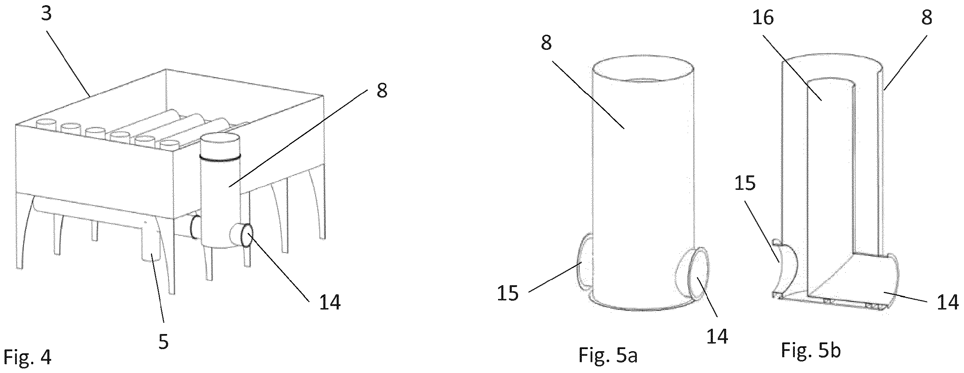

Fig. 4 is a perspective drawing of a surge tank 8 in fluid communication with the water return line 5. From the surge tank 8 there is a drainage outlet 14. The drainage outlet 14 leads any overflow of water overboard.

Fig. 5a is a perspective drawing of the surge tank 8 according to the preferred embodiment of figure 4. The surge tank 8 is used to control the pressure head in the system and to handle any sudden variations in flow. The surge tank 8 can be fitted with a level measurement device. The water column in the surge tank 8 is regulated by the turbine governor which receives input from the level measurement device. The water level will be maintained at a pre-defined set point, which secures a positive pressure in the entire water heating/cooling system. The water return line 5 is provided with wicket gates suitable for controlling the flow rate and pressure head of the water through the water return line 5. The surge tank water level can be controlled by regulating these wicket gates. The surge tank 8 is ventilated to atmosphere so that the water column in the surge tank 8 will work against atmospheric pressure. The overflow of the surge tank 8 is diverted away by a drainage outlet 14.

It is ideal to maintain the water column in the surge tank 8 at a predetermined level, or at least within a short deviation of this level, at all time. This can to a large extend be achieved by determining the appropriate adjustment of the wicket gates based on real-time readout from the level measurement device provided in the surge tank 8. However, if the water flow rate through the water return line 5 should exceed the water flow rate through the water supply line 12, water from the surge tank 8 will be supplied into the water return line 5. And *vice versa*, if the water flow rate through the water supply line (12) exceeds the water flow rate through the water return line (5) water from the water return line 5 will be received by the surge tank 8.

The surge tank 8 may be cylindrical. In the lower part of the cylindrical surge tank 8 there is a surge tank inlet 15. This surge tank inlet 15 allows water to flow from the water return line 5 into the surge tank 8, and *vice versa.* When filling the surge tank 8 to a predetermined level, water is provided through the surge tank inlet 15.

Fig. 5b is a cross section of the perspective drawing figure 5a. The pre-determined water level in the surge tank 8 is set by the height of a further overflow drainage 16 arranged inside the surge tank 8. This overflow drainage 16 has a smaller diameter and is shorter than the surge tank 8.

Both the surge tank 8 and the overflow drainage 16 has an opening to air in their top portion. The overflow drainage 16 has an overflow function. When the water level raises above the top of the overflow drainage 16 the water flows down the overflow drainage 16 and out of the drainage outlet 14. The drainage outlet 14 typically leads the water overboard.

### Reference numerals

1 Water pump
2 Water filter
3 Process facility
4 Vacuum breaker
5 Water return line
6 Turbine inlet valve
7 Water supply line inlet valve
8 Surge tank
9 Water turbine
10 Energy generating device
11 Control room
12 Water supply line
13 Shaft (turbine - energy generating device)
14 Drainage outlet
15 Inlet to surge tank
16 Overflow drainage
17 Water supply line outlet valve
18 Water return line inlet valve
19 Water return line outlet valve
20 Hull

## Claims

1. A system for controlling a flow of water from a process facility onboard a vessel, wherein the system comprises:
• a water supply line (12) comprising a water supply line inlet and a water supply line outlet, wherein the water supply line inlet is arranged to be in fluid communication with a water reservoir;
• a water pump (1) arranged between the water supply line inlet and the water supply line outlet;
• a water return line (5) comprising a water return line inlet and a water return line outlet;
• a process facility (3) in fluid communication with the water supply line outlet and the water return line inlet;
**characterized in that** the system further comprises:
• a water turbine device (9) arranged between the water return line inlet and the water return line outlet, adapted to receive a gravity flow of water from the process facility (3);
• an energy generating device (10) connected to the water turbine device (9);
• a surge tank (8) arranged in fluid communication with the water return line (5);
• a level measurement device; and
• wicket gates, arranged upstream the water turbine device (9), suitable for controlling the flow rate and pressure head in the return line (5);
wherein the wicket gates are regulated according to a water level in the surge tank (8) measured by the level measurement device.

2. The system according to claim 1,
wherein the water turbine device (9) is a Kaplan-type turbine with adjustable blades.

3. The system according to any preceding claims,
wherein the system further comprises:
• a level measurement device provided in the surge tank (8) or in the water return line (5).

4. A method for controlling a flow of water from a process facility onboard a vessel, using the system according to claim 1, wherein the method comprises the steps of:
• directing a flow of water from the process facility through the water return line (5), from the water return line inlet to the water return line outlet;
• controlling the water flow rate and pressure head in the water return line (5) by means of the water turbine device (9);
• controlling a water flow rate and pressure head in the water return line (5) by means of the wicket gates;
• determining the appropriate adjustment of the wicket gates based on real-time readout from the level measurement device and/or real-time readout from the water pump (1);
• supplying water from the surge tank (8) into the water return line (5) when the water flow rate through the water return line (5) exceeds the water flow rate through the water supply line (12); and
• receiving water from the water return line (5) in the surge tank (8) when the water flow rate through the water supply line (12) exceeds the water flow rate through the water return line (5).

5. The method according to claim 4,
wherein the method further comprises the step of:
• generating electric power by means of the energy generating device (10).

## Patentansprüche

1. System zur Steuerung eines Wasserflusses aus einer Prozessanlage an Bord eines Schiffs, wobei das System Folgendes umfasst:
• eine Wasserzufuhrleitung (12), die einen Wasserzufuhrleitungseinlass und einen Wasserzufuhrleitungsauslass umfasst, wobei der Wasserzufuhrleitungseinlass so angeordnet ist, dass er mit einem Wasserreservoir in Fluidkommunikation steht;
• eine Wasserpumpe (1), die zwischen dem Wasserzufuhrleitungseinlass und dem Wasserzufuhrleitungsauslass angeordnet ist;
• eine Wasserrücklaufleitung (5), die einen Wasserrücklaufleitungseinlass und einen Wasserrücklaufleitungsauslass umfasst;
• eine Prozessanlage (3) in Fluidkommunikation mit dem Wasserzufuhrleitungsauslass und dem Wasserrücklaufleitungseinlass;
**dadurch gekennzeichnet, dass** das System ferner Folgendes umfasst:
• eine Wasserturbinenvorrichtung (9), die zwischen dem Wasserrücklaufleitungseinlass und dem Wasserrücklaufleitungsauslass angeordnet ist und dazu ausgelegt ist, einen Schwerkraftwasserfluss aus der Prozessanlage (3) aufzunehmen;
• eine Energieerzeugungsvorrichtung (10), die mit der Wasserturbinenvorrichtung (9) verbunden ist;
• ein Wasserschloss (8), das in Fluidkommunikation mit der Wasserrücklaufleitung (5) angeordnet ist;
• eine Füllstandmessvorrichtung; und
• Schwenktüren, die stromaufwärts der Wasserturbinenvorrichtung (9) angeordnet sind und zum Steuern der Durchflussmenge und der Wassersäule in der Rücklaufleitung (5) geeignet sind;
wobei die Schwenktüren gemäß einem Wasserfüllstand im Wasserschloss (8) reguliert werden, der durch die Füllstandmessvorrichtung gemessen wird.

2. System nach Anspruch 1,
wobei die Wasserturbinenvorrichtung (9) eine Kaplan-Turbine mit einstellbaren Schaufeln ist.

3. System nach einem der vorhergehenden Ansprüche,
wobei das System ferner Folgendes umfasst:
• eine Füllstandmessvorrichtung, die in dem Wasserschloss (8) oder der Wasserrücklaufleitung (5) bereitgestellt ist.

4. Verfahren zur Steuerung eines Wasserflusses aus einer Prozessanlage an Bord eines Schiffs unter Verwendung des Systems nach Anspruch 1, wobei das Verfahren die folgenden Schritte umfasst:
• Führen eines Wasserflusses aus der Prozessanlage durch die Wasserrücklaufleitung (5), von dem Wasserrücklaufleitungseinlass zu dem Wasserrücklaufleitungsauslass;
• Steuern der Wasserdurchflussmenge und der Wassersäule in der Wasserrücklaufleitung (5) durch die Wasserturbinenvorrichtung (9);
• Steuern einer Wasserdurchflussmenge und einer Wassersäule in der Wasserrücklaufleitung (5) durch die Schwenktüren;
• Bestimmen der angemessenen Einstellung der Schwenktüren auf Grundlage einer Echtzeit-Anzeige von der Füllstandmessvorrichtung und/oder einer Echtzeit-Anzeige von der Wasserpumpe (1);
• Zuführen von Wasser aus dem Wasserschloss (8) in die Wasserrücklaufleitung (5), wenn die Wasserdurchflussmenge durch die Wasserrücklaufleitung (5) die Wasserdurchflussmenge durch die Wasserzufuhrleitung (12) übersteigt; und
• Aufnehmen von Wasser aus der Wasserrücklaufleitung (5) im Wasserschloss (8), wenn die Wasserdurchflussmenge durch die Wasserzufuhrleitung (12) die Wasserdurchflussmenge durch die Wasserrücklaufleitung (5) übersteigt.

5. Verfahren nach Anspruch 4,
wobei das Verfahren ferner den folgenden Schritt umfasst:
• Erzeugen von elektrischer Leistung durch die Energieerzeugungsvorrichtung (10).

## Revendications

1. Système pour réguler un écoulement d'eau provenant d'une installation de traitement à bord d'un navire, dans lequel le système comprend :
- une ligne d'alimentation en eau (12) comprenant une entrée de ligne d'alimentation en eau et une sortie de ligne d'alimentation en eau, dans lequel l'entrée de ligne d'alimentation en eau est agencée pour être en communication fluidique avec un réservoir d'eau ;
- une pompe à eau (1) agencée entre l'entrée de ligne d'alimentation en eau et la sortie de ligne d'alimentation en eau ;
- une ligne de retour d'eau (5) comprenant une entrée de ligne de retour d'eau et une sortie de ligne de retour d'eau ;
- une installation de traitement (3) en communication fluidique avec la sortie de ligne d'alimentation en eau et l'entrée de ligne de retour d'eau ;
**caractérisé en ce que** le système comprend en outre :
- un dispositif de turbine à eau (9) agencé entre l'entrée de ligne de retour d'eau et la sortie de ligne de retour d'eau, adapté pour recevoir un écoulement d'eau par gravité de l'installation de traitement (3) ;
- un dispositif de génération d'énergie (10) relié au dispositif de turbine à eau (9) ;
- un réservoir tampon (8) agencé en communication fluidique avec la ligne de retour d'eau (5) ;
- un dispositif de mesure de niveau ; et
- des directrices, agencées en amont du dispositif de turbine à eau (9), adaptées pour réguler le débit et la hauteur piézométrique dans la ligne de retour (5) ;
dans lequel les directrices sont réglées conformément à un niveau d'eau dans le réservoir tampon (8) mesuré par le dispositif de mesure de niveau.

2. Système selon la revendication 1,
dans lequel le dispositif de turbine à eau (9) est une turbine du type Kaplan avec des pales réglables.

3. Système selon l'une quelconque des revendications précédentes,
dans lequel le système comprend en outre :
- un dispositif de mesure de niveau prévu dans le réservoir tampon (8) ou dans la ligne de retour d'eau (5).

4. Procédé pour réguler un écoulement d'eau provenant d'une installation de traitement à bord d'un navire, au moyen du système selon la revendication 1, dans lequel le procédé comprend les étapes de :
- direction d'un écoulement d'eau à partir de l'installation de traitement à travers la ligne de retour d'eau (5), à partir de l'entrée de ligne de retour d'eau vers la sortie de ligne de retour d'eau ;
- régulation du débit d'eau et de la hauteur piézométrique dans la ligne de retour d'eau (5) au moyen du dispositif de turbine à eau (9) ;
- régulation d'un débit d'eau et d'une hauteur piézométrique dans la ligne de retour d'eau (5) au moyen des directrices ;
- détermination du réglage approprié des directrices sur la base d'une lecture en temps réel à partir du dispositif de mesure de niveau et/ou d'une lecture en temps réel à partir de la pompe à eau (1) ;
- amenée d'eau à partir du réservoir tampon (8) dans la ligne de retour d'eau (5) lorsque le débit d'eau à travers la ligne de retour d'eau (5) dépasse le débit d'eau à travers la ligne d'alimentation en eau (12) ; et
- réception d'eau de la ligne de retour d'eau (5) dans le réservoir tampon (8) lorsque le débit d'eau à travers la ligne d'alimentation en eau (12) dépasse le débit d'eau à travers la ligne de retour d'eau (5).

5. Procédé selon la revendication 4,
dans lequel le procédé comprend en outre l'étape de :
- génération d'une puissance électrique au moyen du dispositif de génération d'énergie (10).
